# EUROPEAN PATENT APPLICATION

(11) **EP 3 770 226 A1**
(43) Date of publication of application: **27.01.2021**
(21) Application number: 19774870.0
(22) Date of filing: 28.03.2019
(51) Int. Cl.: C09D 133/00, C09D 163/00, C09D 5/25, C08G 18/08

(54) **WATER-SOLUBLE, ENVIRONMENTALLY-FRIENDLY, SELF-ADHESIVE INSULATING COATING FOR SILICON STEEL**

(30) Priority: 30.03.2018 CN 201810275197
(71) Applicant: BAOSHAN IRON & STEEL CO., LTD., Shanghai 201900 (CN)
(72) Inventor: LI, Dengfeng, Shanghai 201900 (CN); WANG, Bo, Shanghai 201900 (CN); LI, Guobao, Shanghai 201900 (CN); GUO, Jianguo, Shanghai 201900 (CN); XIAO, Pan, Shanghai 201900 (CN); SHEN, Kejin, Shanghai 201900 (CN); XIE, Shishu, Shanghai 201900 (CN)
(74) Representative: Santarelli
(86) International application number: PCT/CN2019/080095
(87) International publication number: WO 2019/184981

(57) **Abstract**

The present disclosure provides a water-soluble, environment-friendly, self-bonding insulating coating material for silicon steel, comprising a thermosetting aqueous film-forming resin, a thermoplastic aqueous film-forming resin, inorganic nanoparticles, auxiliary agent, solvent and pure water. the solid weight of the thermosetting aqueous film-forming resin accounts for 0.1-50% of the total weight of the coating material, the solid weight of the thermoplastic aqueous film-forming resin accounts for 0.1-60% of the total weight of the coating material, the solid weight of the inorganic nanoparticles accounts for 0.1-10% of the total weight of the coating material, the weight of auxiliary agent and solvent accounts for 5-25% of the total weight of the coating material. The coating material can produce a thin, sticky, insulation, none-edge-overflow self-bonding coating product. During second curing molding of a laminated iron core, excessive pressure and temperature are not required, thereby shortening the curing time, and increasing the iron core processing efficiency.

## Description

### Field of the Disclosure

The present disclosure relates to a water-soluble, environment-friendly, self-bonding insulating coating material for silicon steel.

### Background of Art

Stacking and molding of motor iron core in the mass production includes methods of bolting, welding, riveting and bonding. By bonding, the silicon steel sheets can be assembled by face fixation, providing the stacking molding process with the advantages of no pollution, high iron core fixing strength, low magnetic vibration noise, and high iron core efficiency. Bonding is especially suitable for situations where distortion or insufficient rigidity happens by other fixing methods and where it is inconvenience for riveting or welding.

One common method for fixing and molding the silicon steel sheets by bonding is to apply a self-bonding coating on the surface of silicon steel sheets. This method has the following problems: the imported self-bonding coated silicon steel costs high, and the stacking molding process of iron core is complicated and low in efficiency; the relatively thick self-bonding coating would overflow at the end surface of silicon steel sheet during secondary curing, resulting in a large difference in the laminated thickness of the iron core, a decrease in the lamination factor, and even need for additional processes such as iron core edge grinding, etc., thus the acceptance of current silicon steel self-bonding coating products is not good.

The existing self-bonding coating material mainly comprises thermosetting epoxy emulsion and its curing agent (or accelerator) as typical composition. Such coating product has a large bonding strength, good corrosion resistance and cold resistance, thus satisfies user's requirements well, a representative of which is Remisol EB546/547/548/549 series produced by Rembrandtin. However, the bonding strength of such conventional self-bonding coating is positively correlated with the film thickness of the coating. In order to ensure excellent bonding strength, insulation and corrosion resistance, the dry film thickness of the coating on each surface is generally more than 4µm. In addition, when the iron core is secondarily cured and molded, the crosslinking and film forming of organic resin is an exothermic reaction, leading to various problems such as a decrease in the lamination factor, a large difference in the laminated thickness of the iron core, and a coating overflow at the edge under hot pressure, which limit end users' recognition of self-bonding coating products. Moreover, the processing conditions of conventional self-bonding coating in the secondary curing process of iron core are 180∼250°C, 1∼4 hours' holding, and under loading of 6∼30Bar. Therefore, the users generally complain the high requirements of the stacking molding process of iron core and low efficiency.

At present, in view of the self-bonding coating component being mainly organics, in order to improve the heat resistance, the skilled person would add inorganic particles such as a sol or dispersion of silicon/aluminum/titanium, or a composite salt of a metal oxide and a silicon boride, or a phosphate, or an inorganic filler into conventional self-bonding coating composition. However, only the dispersion of silicide, aluminide, and titanium compound has industrial applicability, but other inorganic additives are difficult for large scale implementation. Even if the dispersion of inorganic salt is added to the coating, the heat resistance of the self-bonding coating can only be improved to some extent, but cannot withstand the high temperature under the iron core annealing, bluing and other processing. Therefore, the temperature-resistant self-bonding coating material as such may only have specific applications for few users. At present, there is no relevant promotion and application information from silicon steel plants, and the above-mentioned defects in use of conventional self-bonding coating have not been solved.

### Summary

The object of the present disclosure is to provide a water-soluble, environment-friendly, self-bonding insulating coating material for silicon steel, which solves the problems of the existing coating brought by high coating thickness, such as coating overflow at the edge under hot pressure and poor longitudinal laminated thickness difference of iron core. The coating material of the present disclosure can produce thin, sticky, high insulation, and none-edge-overflow self-bonding coatings, improving the using conditions such as temperature, time and load force in the iron core curing and molding process, and expanding the application breadth and depth for silicon steel self-bonding insulation coating products.

In order to achieve the above object, the technical solution of the present disclosure is:
A water-soluble environment-friendly self-bonding insulating coating material for silicon steel, comprising: a thermosetting aqueous film-forming resin, a thermoplastic aqueous film-forming resin, inorganic nanoparticles, auxiliary agent, solvent and pure water, wherein the solid weight of the thermosetting aqueous film-forming resin accounts for 0.1-50% of the total weight of the coating material, the solid weight of the thermoplastic aqueous film-forming resin accounts for 0.1-60% of the total weight of the coating material, the solid weight of the inorganic nanoparticles accounts for 0.1-10% of the total weight of the coating material, the weight of the auxiliary agent and the solvent accounts for 5-25% of the total weight of the coating material, and the balance is the pure water.

Preferably, the solid weight of the thermosetting aqueous film-forming resin accounts for 5-20% of the total weight of the coating material.

Preferably, the solid weight of the thermoplastic aqueous film-forming resin accounts for 20-40% of the total weight of the coating material.

Preferably, the solid weight of the thermoplastic aqueous film-forming resin accounts for 20∼95%, and preferably 65∼85% of the sum of the weight of the thermosetting aqueous film-forming resin and the thermoplastic aqueous film-forming resin.

Preferably, the solid weight of the inorganic nanoparticles accounts for 2-6% of the total weight of the coating material.

Preferably, the auxiliary agent and the solvent contain ethylene glycol, and the weight of the ethylene glycol accounts for 0.1 to 3.5% of the total weight of the water-soluble environment-friendly self-bonding insulating coating material.

Preferably, the thermosetting aqueous film-forming resin comprises epoxy resin and curing agent.

Preferably, the solid weight of the epoxy resin accounts for 80-99%, and preferably 91∼98% of the weight of the thermosetting aqueous film-forming resin.

More preferably, the epoxy resin has an epoxy equivalent of 100-2000g/eq, a weight average molecular weight Mw of 200-4000,and a the functionality of 2-3.

The curing agent is one or more selected from dicyandiamide, amino resin, imidazole, and polyisocyanate.

Preferably, the thermoplastic aqueous film-forming resin is one or more selected from polyvinyl acetate copolymer, polyurethane copolymer, and polyacrylate copolymer.

More preferably, the thermoplastic aqueous film-forming resin is polyurethane copolymer elastomer.

The polyurethane copolymer elastomer of the disclosure is prepared as follows:
polyester diol and dimethylolpropionic acid(DMPA) are dehydrated at 100∼110°C and a vacuum degree of 0.085∼0.095MPa for 0.5∼1 hour, then cooled to 10∼60°C; hydrophilic functional monomer diisocyanate that has been dried is added for reaction at 60∼90 °C for 1∼4 hours; a prepolymer is obtained, and then add neopentyl glycol and trimethylolpropane (TMP) at this temperature for chain extension, the chain extension reaction time is 2∼5 hours, and a polyurethane copolymer elastomer having a molecular weight of 20,000 to 80,000, a film forming temperature of from room temperature to 200°C, and a ring-opening temperature of 120∼180 °C is obtained.

Further, in the above preparation method, a small amount of N-methylpyrrolidone (NMP) is appropriately added to reduce the viscosity while adding the hydrophilic functional monomer diisocyanate.

The molar ratio of the hydrophilic functional monomer diisocyanate to dimethylolpropionic acid is 1:0.5∼1.

The hydrophilic functional monomer diisocyanate is toluene diisocyanate (TDI), hexamethylene diisocyanate (HDI), isophorone diisocyanate, or the like.

And the molar ratio of the hydrophilic functional monomer diisocyanate to dimethylolpropionic acid is 1:0.5∼1, which ensures that each dimethylolpropionic acid molecule has two active reaction points participating in the chain extension reaction during the prepolymerization process, and will not be blocked by hydrophilic functional monomer (a tertiary amino group compound containing only one active functional group).

The polyester diol has a hydroxyl value of from 100 to 200 mgKOH/g, the molar ratio of the isocyanate NCO group of the diisocyanate to the hydroxyl group of dehydrated product of polyester diol and dimethylolpropionic acid is 4:3 to 5:4, the carboxyl group content of dimethylolpropionic acid is 2.1∼2.5% of the weight of the prepolymer.

Further, the molar ratio of the hydroxyl group of the glycol in the chain extension reaction to the blocked isocyanate group in the prepolymer is 0.9∼1:1.

Another preparation method of the polyurethane copolymer elastomer of the present disclosure is as follows:
polyester diol and a functional monomer dimethylolpropionic acid(DMPA) are dehydrated at 100-110°C and a vacuum degree of 0.085∼0.095MPa for 0.5∼1 hour, then cooled to 10∼60°C; diisocyanate is added for reaction at 60∼90°C for 1∼4 hours; a NCO-terminated prepolymer as obtained is added into an aqueous solution containing triethylamine as neutralizer and trimethylolpropane (TMP) as chain extender under stirring condition, a reaction is carried out at 60∼90°C for 2∼5 hours, and a polyurethane copolymer elastomer having a molecular weight of 20,000 to 80,000, a film forming temperature of from room temperature to 200°C, and a ring-opening temperature of 120∼180 °C is obtained.

Furthermore, in the above preparation method, the mass of the dimethylolpropionic acid accounts for 4∼8% of the total mass of the prepolymer monomers (the sum of the mass of the polyester diol, dimethylolpropionic acid and diisocyanate).

The hydrophilic functional monomer diisocyanate is toluene diisocyanate, hexamethylene diisocyanate or isophorone diisocyanate.

The polyester diol has a hydroxyl value of 100∼200 mgKOH/g.

The molar ratio of the isocyanate NCO group of the diisocyanate to the hydroxyl group of dehydrated product of polyester diol and dimethylolpropionic acid is 4:3 to 5:4, in this way, an isocyanate-terminated prepolymer can be obtained for subsequent chain extension.

The molar ratio of the isocyanate NCO group of the prepolymer to the hydroxyl group of the trimethylolpropane is 1:1.

The molar ratio of the triethylamine as neutralizer to dimethylolpropionic acid in the prepolymer monomers is 1∼1.1:1, and a slight excess of the neutralizer ensures complete neutralization. The weight ratio of water to prepolymer is 1.8∼2:1.

Preferably, the inorganic nanoparticles are at least one selected from TiO₂, ZnO, SiO₂, Al₂O₃, ZrO₂, Fe₃O₄, CaCO₃ and Cr₂O₃.

Preferably, the auxiliary agent is at least one of an antifoaming agent, a wetting agent, a leveling agent, a thickener, an anti-sedimentation agent, and an anti-flash rust agent.

Preferably, the solvent comprises ethylene glycol, and further comprises at least one selected from glycerol, propylene oxide, n-butanol, isobutanol, isopropanol, ethylene glycol monomethylether, ethylene glycol butyl ether, propylene glycol monomethyl ether, propylene glycol butyl ether, triethylene glycol ether and propylene glycol monomethyl ether acetate.

It is found in the present disclosure that, when thermosetting aqueous film-forming resin is separately applied on silicon steel coil and baked to form a film, part of the epoxy resin and latent curing agent are thermally reacted and crosslinked to form a film, and the residual active epoxy resin do not react with the curing group. When two coated sheets are heated and compressed after molded into an iron core, the active epoxy resin remaining in the coating and the curing group are heated and then are crosslinked to form a three-dimensional film network, thereby generating adhesive ability and forming a thermosetting self-bonding coating. The thermosetting self-bonding coating has excellent mechanical protection, corrosion resistance, solvent resistance and insulation, and has certain heat resistance and bonding strength. However, a certain thickness (e.g. >4µm) needs to be ensured for the coating in order to obtain a strong bonding strength. Furthermore, the crosslinking and curing reaction of this kind of coating is exothermic, so the edge overflow of the coated steel sheet is inevitable.

It is found in the present disclosure that the thermoplastic aqueous film-forming resin is separately applied on silicon steel coil, and is baked to remove moisture and solvent, then deposits densely to form a film. When two coated sheets are heated and compressed after molded into an iron core, the chain-like groups of the resin stretch. After cooling, they interlock with each other to generate a bonding force. The thermoplastic self-bonding coating film has excellent bonding strength, and the drying and curing processes are endothermic reactions, which greatly improve or even eliminate the edge overflow phenomenon of the coated steel sheet. However, such coatings are soft, and relatively insufficient in mechanical protection and corrosion resistance.

In view of the respective performance of the thermosetting and thermoplastic film-forming resins, the present disclosure uses these two resins in combination. It is found in the present disclosure that, by adding a thermosetting film-forming resin to a film-forming resin and controlling the solid weight of the thermoplastic aqueous film-forming resin accounts for 20∼95%, and preferably 65∼85% of the sum of the weight of the thermosetting aqueous film-forming resin and the thermoplastic aqueous film-forming resin, the following effects are obtained: a) due to the addition of thermoplastic film-forming resin component, the resulting coating has strong adhesion under thin film conditions; b) in coating the coating material on the surface of the silicon steel sheet, fixing and forming the iron core, higher the proportion of the thermoplastic resin in the coating, lower the overall hardness of the coating is after the iron core is subjected to the first curing, such that the load pressure required during the second curing of the iron core is smaller, and even curing and bonding can be achieved only upon the iron core's own weight without additional pressure; c) since the thermoplastic film formation is an endothermic reaction, together with the thinner coating film thickness and lower load pressure, the overflow phenomenon of the iron core end face after second curing can be easily controlled or even be eliminated.

The coating material of the present disclosure also requires the addition of reactive inorganic nanoparticles to form physical/chemical crosslinking points with the functional groups of the thermosetting/thermoplastic film-forming resin, Thus, R-O-R and/or R-O-C bonds are introduced into the molecular chain of the functional group of the resin (R stands for Si/Al/Ti/Zr/Zn and other metal elements) to form a network structure. The solid weight of inorganic nanoparticles is 0.1-10%, preferably 2-6%, if the content is too small, the above-mentioned effects will not be exerted, and if the content is too large, the overall stability of the coating liquid will be poor, which will reduce the bonding strength between the coating sheets.

When the inorganic nanoparticles between the coated sheets in form of iron core are heated and compressed, either a three-dimensional network structure formed by thermosetting crosslinking or mixed molecular chains formed by thermoplastic stretching and interlocking play a function of anti-deformation effect as a "rivet", and bring a structural reinforcing effect, which is beneficial to the improvement of the bonding strength of the coating. In addition, inorganic nanoparticles can improve the mechanical protection, insulation, heat resistance and compactness of the coating, and provide basic guarantee for the required properties of the film coating.

The main function of the auxiliary agent in the coating material of the disclosure is to ensure the coating workability of the aqueous coating material on the high-speed roll coating, and to prevent possible coating defects such as wetting, leveling, air bubbles and flash rust. The organic solvent in the coating material is mainly used to increase the water solubility of the organic resin and the auxiliary agent, and at the same time, it can reduce the surface tension of the solution, prevent the formation of shrinkage holes, missing coating and other defects during the baking process of the coating, and also has a defoaming effect. The auxiliary agent and the solvent preferably contain ethylene glycol, which has a moisturizing effect, and the amount of the ethylene glycol is 0.1∼3.5%, the main purpose is to prevent the coating material from forming a film at low temperature after air-drying, which makes it difficult to wash off with water.

The addition of pure water to the coating material of the present disclosure can adjust the solid content of the final coating material to 30-55%, and the coating viscosity is controlled to 15-60 seconds in order to achieve precise control of the target coating film thickness.

The silicon steel with double-sided coating of the self-bonding coating material provided by the disclosure is dried at a coil temperature of 180-260 °C, the thickness of the dry film on each side is controlled to 1∼4µm. When the coated silicon steel sheet is laminated into an iron core after shearing and punching, the second curing process is: The load pressure of the iron core is 0.1∼8Bar, and the temperature is maintained at 120∼200 °C for 0.5∼4 hours, preferably the load pressure is 0.5∼4Bar, and the temperature is maintained at 150-200 °C for 0.5∼2 hours, Therefore, the use of the self-bonding coating material of the present disclosure can reduce the requirements of the second curing temperature, time and load pressure in the iron core molding process, and improve the user's use conditions such as temperature, time and load force in the iron core curing molding process.

The beneficial effects of the disclosure:
The disclosure prepares a self-bonding insulating coating material by adding a thermoplastic aqueous film-forming resin. When the thickness of the self-bonding coating film prepared is 1∼4 µm, a high bonding strength (2∼4.2 N/mm) and a high insulation (surface insulation resistance ≥30 Ω.cm²/ piece) are achieved. Thus, in addition to basic properties of insulation, heat resistance and corrosion resistance, a thinner self-bonding coating film can also obtain higher bonding strength. And when the iron core is laminated and then secondarily cured and molded, there is no self-bonding coating overflow at the end of the silicon steel sheet. When the iron core is laminated and secondarily cured and molded, there is no need to load excessive pressure and excessive temperature, and the curing time is shortened, the using requirements are not high, and the iron core processing efficiency is improved.

The coating material of the present disclosure is based on an aqueous epoxy/polyurethane and other film-forming resins, and solvents that are low toxic and low hazardous. The obtained coating is a non-hazardous chemical, with low VOC emission and is completely green and environmentally friendly. The aqueous environment-friendly insulating coating material can be applied to the surface of silicon steel sheets used in various motors, especially micro motors, servo motors, automobile motors and other emerging fields. The coating material has excellent bonding strength and insulation. At the same time, it solves the problem of edge overflow existing in conventional self-bonding coating products, and improves the using requirements, showing obvious practicability and large space for commercial application.

### BRIEF DESCRIPTION OF THE DRAWINGS

Figure 1 is a graph showing the relationship between the thickness of the coating film and bonding strength in Example 3 of the present disclosure.
Fig. 2 is a graph showing the relationship between the thickness of the coating film and the phenomenon of edge overflow in Example 3 of the present disclosure.
Figure 3 is a graph showing the relationship between curing temperature and bonding strength in Example 3 of the present disclosure.
Figure 4 is a graph showing the relationship between load pressure and bonding strength in Example 3 of the present disclosure.

### DESCRIPTION OF THE EMBODIMENTS

The disclosure will be further described below in conjunction with the embodiments and the drawings.

### Embodiment (1)

See Tables 1-2 for coating formulations consisting of a thermosetting aqueous film-forming resin, a thermoplastic aqueous film-forming resin, inorganic nanoparticles, auxiliary agent, solvent, and water. The various components are mixed and stirred uniformly to prepare a coating solution for use (the inorganic nanoparticles can be first dispersed in pure water at a high speed and then added in the form of dispersion).

The preparation method of the copolymer elastomer I in Table 1 is as follows: 0.26 mol of polyester diol with a molecular weight of 1000 (Shichao Chemical CT-EP1000) and 0.14 mol of dimethylolpropionic acid are dehydrated at 105 °C and a vacuum degree of 0.09 MPa for 1 hour, then cooled to 30 °C, 0.5 mol of isophorone diisocyanate (IPDI) that has been dried is added for reacting at 70 °C for 4 hours, and then the prepolymer is added into an aqueous solution containing 0.147 mol of triethylamine and 0.667 mol of trimethylolpropane (TMP) under stirring condition, the amount of water is 776 ml, and further maintained under stirring at 80 °C for 3.5 hours to obtain an aqueous polyurethane copolymer elastomer having a molecular weight of about 70 thousand, a film forming temperature of about 100°C, and a ring-opening temperature of about 150 °C. For the convenience of comparison, the solid content of all coating solution is controlled to 40∼50%, and the Tu-4 Cup Viscosity of the coating solution is 20∼30 seconds. The coating solution is coated on the surface of the M300-35A high-grade silicon steel coil by a two-roll or three-roll roll coater, and is baked for the first curing to form a film at a plate temperature of 180-260°C in an open flame baking oven or an infrared drying oven. The single-sided dry film thickness of coating is controlled to be 3 µm.
Among them, Example 1: epoxy resin, trade name D.E.R.™915, purchased from DOW; modified amine, trade name JH-6311M, purchased from Jeddah new material; alumina, trade name Aerodisp® W 640 ZX, purchased from Evonik; leveling agent BYK-348 was purchased from BYK Chemical, and anti-flash rusting agent ZT-709 was purchased from Haichuan Chemical.
Example 2: Epoxy resin, trade name Epikote 6520, purchased from HEXION; dicyandiamide, trade name Dicyanex®1400F, purchased from American gas; silica, trade name HDK® A3017, purchased from Wacker Chemical; leveling agent BYK-346 And defoamer BYK-025 was purchased from BYK Chemical.
Example 3: Epoxy resin, trade name CT-E600, purchased from Shichao Chemical; dicyandiamide, trade name Dicyanex®1400F, purchased from American gas; silica, trade name Aerosil® 300, purchased from Evonik; defoamer BYK -025 was purchased from BYK Chemical, and the wetting agent Tego 245 was purchased from TEGO.
Example 4: Epoxy resin, trade name Epikote 6520, purchased from HEXION; modified amine, trade name JH-6311M, purchased from Jeddah new material; polyurethane, trade name CT-1406, purchased from Shichao Chemical; Silica, trade name HDK® A3017, purchased from Wacker Chemical; defoamer BYK-025, purchased from BYK Chemical, and wetting agent Tego 245, purchased from TEGO.
Example 5: Epoxy resin, trade name D.E.R.TM 915, purchased from DOW; dicyandiamide, trade name Dicyanex®1400F, purchased from American gas; vinyl acetate-ethylene copolymer, trade name Celvolit® 1496, purchased from Celanese; Silicon, trade name Aerosil® 380, purchased from Evonik; leveling agent BYK-346, purchased from BYK Chemical.
Comparative Example 1: Epoxy resin, trade name CT-E600, purchased from Shichao Chemical; amino resin, trade name Cymel 325, purchased from Allnex; silica, trade name CAB-O-SIL EH-5, purchased from Cabot; leveling agent BYK-346, purchased from BYK Chemical, and the anti-flash rusting agent ZT-709 was purchased from Haichuan Chemical.
Comparative Example 2: Titanium dioxide, trade name Aerodisp® W 740 X, purchased from Evonik; leveling agent BYK-348 and defoamer BYK-025 were purchased from BYK Chemical.

The evaluation results of the coating properties are shown in Table 3. The evaluation symbols in Table 3: ⊚ excellent; ⊙ good; ○ general; Δ poor; × poor and unacceptable.

As can be seen from Table 3, the pure thermosetting coatings (Comparative Example 1 and Comparative Example 3) have good protection, but have poor bonding properties as self-bonding coatings; and the pure thermoplastic coating (Comparative Example 2) has the best bonding properties, but the coating has poor or even unacceptable protection and heat resistance; and the thermoplastic/thermosetting hybrid coatings of Examples 1 to 5 have better overall performance, in which example 3 can not only obtain excellent bonding properties, but also take into account other coating properties, which is the best example.

### Embodiment (2) Compare the effects of different film thicknesses on coating processing performance

The coating formulations of Example 3 and Comparative Example 3 are used. The coating solution is coated on the surface of the M300-35A high-grade silicon steel coil by a two-roll or three-roll roll coater, and is baked for the first curing to form a film at a plate temperature of 180-260°C in an open flame baking oven or an infrared drying oven. Coating film having different thickness are adjusted and obtained. Conventional curing process outside the mold is used for the second curing, wherein a load pressure of 4Bar is applied, and the temperature is maintained at 200 °C for 1.5 hours.

When the film thickness is 3 µm, the insulation is measured by ASTM A717 standard, and the surface insulation resistance is ≥30 Ω·cm²/piece, which has a high insulation.

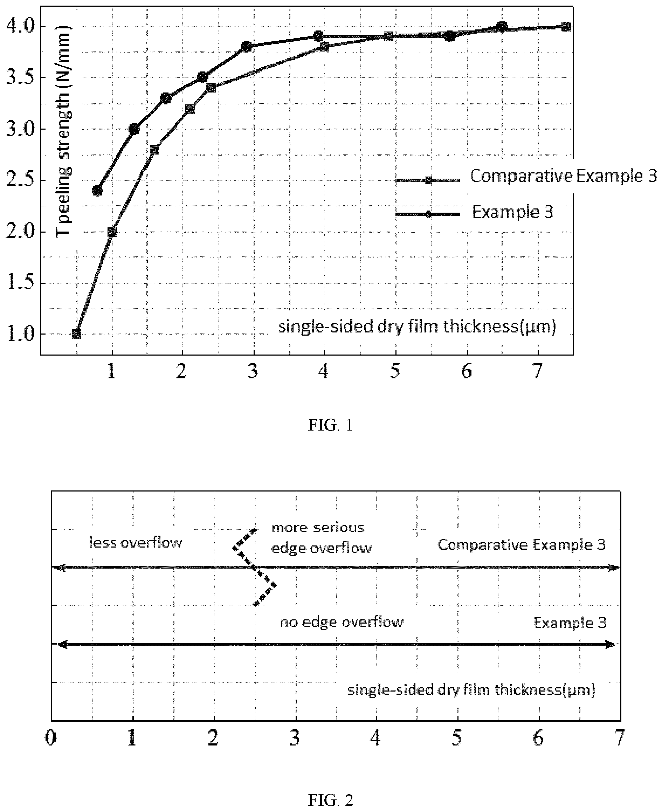

The relationship between the bonding strength (tested by the ISO 11339 standard T-peel method, the same below) and the film thickness of the coating is shown in Fig. 1. The relationship between the coating film thickness and the phenomenon of edge overflow is shown in Fig. 2.

It can be seen from FIG. 1 that the self-bonding coating film obtained by the coating material of Example 3 of the present disclosure has a bonding strength of 2.6-4.2 N/mm when the film thickness is 1∼4 µm, it has a strong adhesion; when the film thickness is less than 4µm, the bonding strength of the self-bonding coating film obtained by the disclosure is better than that of the Comparative Example 3.

It can be seen from FIG. 2 that the film obtained by the coating of Example 3 of the present disclosure showed no overflow phenomenon within the thickness range of 0∼7µm, but the coating obtained by the Comparative Example 3 had a serious phenomenon of edge overflow when the film thickness was thick.

### Embodiment (3) Compare the effects of different secondary curing processes on the processing properties of coatings

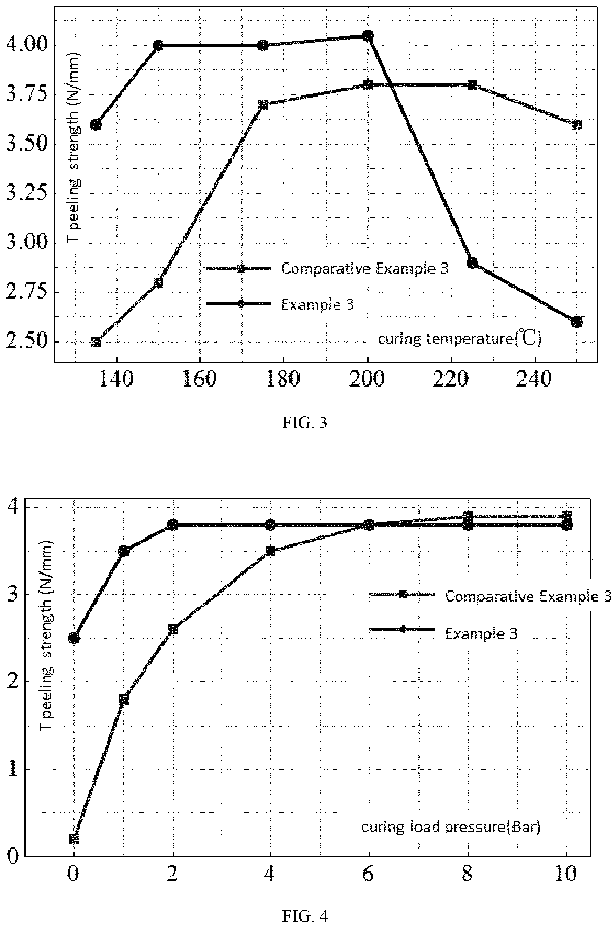

The coating formulations of Example 3 and Comparative Example 3 are used, and the coating solution is coated on the surface of the M300-35A high-grade silicon steel coil by a two-roll or three-roll roll coater, and is baked for the first curing to form a film at a plate temperature of 180-260°C in an open flame baking oven or an infrared drying oven, the single-sided dry film thickness of coating is controlled to be 3∼3.5µm. Conventional second curing process outside the mold is used: a) the load pressure is 6Bar, the Curing time is 1.5 hours, but the curing temperature is different, the relationship between curing temperature and bonding strength is shown in Figure 3; b) maintains at 200°C for 1.5 hours, but the load pressure is different, the relationship between load pressure and bonding strength is shown in Figure 4.

It can be seen from Fig. 3 that when the coating solution of Example 3 of the present disclosure is secondarily cured into a film, a higher bonding strength can be obtained at a curing temperature ≤ 200°C, indicating that the coating provided by the present disclosure can achieve higher bonding strength at a lower curing temperature during the second curing.

It can be seen from Fig. 4 that when the coating solution of the Example 3 of the present disclosure is secondarily cured into a film, a higher bonding strength can be obtained under the load pressure ≤ 4 Bar, indicating that the coating provided by the present disclosure can achieve higher bonding strength at a lower load pressure during the second curing.

**Table 1**

| Serial number | Component A | | Component B | Component C | Component D | | Component E |
|---|---|---|---|---|---|---|---|
| | epoxy resin | curing agent | thermoplastic resin | inorganic nanoparticle | auxiliary agent | solvent | |
| Example 1 | epoxy resin | modified amine | copolymer elastomer I | alumina | leveling agent; anti-flash rusting agent | ethylene glycol; propylene glycol monomethyl ether | water |
| Example 2 | epoxy resin | dicyandiamide | copolymer elastomer I | silica | leveling agent; defoamer | ethylene glycol; ethylene glycol monomethylether | water |
| Example 3 | epoxy resin | dicyandiamide | copolymer elastomer I | silica | defoamer; wetting agent | ethylene glycol; propylene glycol monomethyl ether acetate | water |
| Example 4 | epoxy resin | modified amine | polyurethane | silica | defoamer; wetting agent | ethylene glycol; propylene glycol butyl ether | water |
| Example 5 | epoxy resin | dicyandiamide | vinyl acetate-ethylene copolymer | silica | leveling agent; anti-flash rusting agent | ethylene glycol; n-butanol | water |
| Comparative Example 1 | epoxy resin | amino resin | -- | silica | leveling agent; anti-flash rusting agent | ethylene glycol; isobutanol | water |
| Comparative Example 2 | -- | -- | copolymer elastomer I | titanium dioxide | leveling agent; defoamer | ethylene glycol; isopropanol | water |
| Comparative Example 3 | Rembrandtin company Remisol EB 548 commercial coating | | | | | | |

**Table 2**

| Serial number | Component A (The weight percentage of solid component, %) | | Component B (The weight percentage of solid component, %) | Component C (The weight percentage of solid component, %) | Component D (Weight percentage , %) | Component E (Weight percentage, %) |
|---|---|---|---|---|---|---|
| | epoxy resin | curing agent | thermoplastic resin | inorganic nanoparticle | auxiliary agent + solvent | pure water |
| Example 1 | 3.3 | 0.1 | 38 | 5 | the balance is auxiliary agent + solvent + pure water, among them, containing 2% ethylene glycol; the total amount of components (A+B+C+D+E) is 100 | |
| Example 2 | 5 | 0.3 | 35 | 6 | | |
| Example 3 | 10 | 0.6 | 30.4 | 3 | | |
| Example 4 | 14 | 1 | 26 | 4 | | |
| Example 5 | 20 | 1 | 20 | 2 | | |
| Comparative Example 1 | 40 | 6 | 0 | 1 | | |
| Comparative Example 2 | 0 | 0 | 40 | 8 | | |
| Comparative Example 3 | Rembrandtin company Remisol EB 548 commercial coating | | | | | |

**Table 3**

| Property | Example | | | | | Comparative Example | | |
|---|---|---|---|---|---|---|---|---|
| | Example 1 | Example 2 | Example 3 | Example 4 | Example 5 | Comparative Example 1 | Comparative Example 2 | Comparative Example 3 |
| Cold bonding control | ○ | ⊙ | ⊚ | ⊚ | ⊚ | ⊚ | Δ | ⊚ |
| Pencil hardness | Δ | Δ | ○ | ⊙ | ⊙ | ⊚ | × | ⊚ |
| Scratch resistance | Δ | ○ | ⊙ | ⊙ | ⊚ | ⊚ | × | ⊚ |
| Ethanol resistance | Δ | ○ | ⊙ | ⊙ | ⊚ | ⊙ | × | ⊙ |
| Salt mist corrosion resistance | ⊙ | ⊙ | ⊚ | ⊚ | ⊚ | Δ | ⊙ | ⊙ |
| Interlamination resistance | ⊙ | ⊙ | ⊚ | ⊚ | ⊚ | ⊚ | ⊙ | ⊚ |
| Cross grid test | ⊙ | ⊙ | ⊚ | ⊚ | ⊚ | ⊚ | ⊙ | ⊚ |
| Bonding strength | ⊚ | ⊚ | ⊚ | ⊙ | ○ | ○ | ⊚ | ⊙ |
| Heat resistance | Δ | ○ | ⊙ | ⊙ | ⊚ | ⊚ | Δ | ⊚ |

## Claims

1. A water-soluble environment-friendly self-bonding insulating coating material for silicon steel, comprising: a thermosetting aqueous film-forming resin, a thermoplastic aqueous film-forming resin, inorganic nanoparticles, auxiliary agent, solvent, and pure water, wherein the solid weight of the thermosetting aqueous film-forming resin accounts for 0.1-50% of the total weight of the coating material, the solid weight of the thermoplastic aqueous film-forming resin accounts for 0.1-60% of the total weight of the coating material, the solid weight of the inorganic nanoparticles accounts for 0.1-10% of the total weight of the coating material, the weight of the auxiliary agent and the solvent accounts for 5-25% of the total weight of the coating material, and the balance is the pure water.

2. The water-soluble environment-friendly self-bonding insulating coating material for silicon steel according to claim 1, wherein the solid weight of the thermosetting aqueous film-forming resin accounts for 5-20% of the total weight of the coating material.

3. The water-soluble environment-friendly self-bonding insulating coating material for silicon steel according to claim 1, wherein the solid weight of the thermoplastic aqueous film-forming resin accounts for 20-40% of the total weight of the coating material.

4. The water-soluble environment-friendly self-bonding insulating coating material for silicon steel according to claim 1, wherein the solid weight of the thermoplastic aqueous film-forming resin accounts for 20∼95%, and preferably for 65∼85% of the sum of the weight of the thermosetting aqueous film-forming resin and the thermoplastic aqueous film-forming resin.

5. The water-soluble environment-friendly self-bonding insulating coating material for silicon steel according to claim 1, wherein the solid weight of the inorganic nanoparticles accounts for 2-6% of the total weight of the coating material.

6. The water-soluble environment-friendly self-bonding insulating coating material for silicon steel according to claim 1 or 2, wherein the thermosetting aqueous film-forming resin comprises epoxy resin and curing agent.

7. The water-soluble environment-friendly self-bonding insulating coating material for silicon steel according to claim 6, wherein the solid weight of the epoxy resin accounts for 80-99%, and preferably for 91∼98% of the weight of the thermosetting aqueous film-forming resin.

8. The water-soluble environment-friendly self-bonding insulating coating material for silicon steel according to claim 6 or 7, wherein the epoxy resin has an epoxy equivalent of 100-2000g/eq, a weight average molecular weight Mw of 200-4000, and a functionality of 2-3.

9. The water-soluble environment-friendly self-bonding insulating coating material for silicon steel according to claim 6, wherein the curing agent is one or more selected from dicyandiamide, amino resin, imidazole, and polyisocyanate.

10. The water-soluble environment-friendly self-bonding insulating coating material for silicon steel according to claim 1 or 3 or 4, wherein the thermoplastic aqueous film-forming resin is one or more selected from polyvinyl acetate copolymer, polyurethane copolymer, and polyacrylate copolymer.

11. The water-soluble environment-friendly self-bonding insulating coating material for silicon steel according to claim 1, wherein the thermoplastic aqueous film-forming resin is polyurethane copolymer elastomer.

12. The water-soluble environment-friendly self-bonding insulating coating material for silicon steel according to claim 11, wherein the polyurethane copolymer elastomer is prepared as follows: polyester diol and a functional monomer dimethylolpropionic acid are dehydrated at 100∼110°C and a vacuum degree of 0.085∼0.095MPa for 0.5∼1 hour, then cooled to 10∼60°C; hydrophilic functional monomer diisocyanate that has been dried is added for prepolymerization reaction at 60∼90°C for 1∼4 hours; a isocyanate group NCO-terminated prepolymer as obtained is added into an aqueous solution containing triethylamine as neutralizer and trimethylolpropane (TMP) as chain extender under stirring condition, a reaction is carried out at 60∼90 °C for 2∼5 hours so as to obtain aqueous polyurethane copolymer elastomer.

13. The water-soluble environment-friendly self-bonding insulating coating material for silicon steel according to claim 12, wherein the polyurethane copolymer elastomer has a weight average molecular weight of 20,000 to 80,000, a film forming temperature of from room temperature to 200°C, and a ring-opening temperature of 120∼180 °C.

14. The water-soluble environment-friendly self-bonding insulating coating material for silicon steel according to claim 12, wherein the mass of the dimethylolpropionic acid accounts for 4∼8% of the sum of the mass of the polyester diol, dimethylolpropionic acid and diisocyanate.

15. The water-soluble environment-friendly self-bonding insulating coating material for silicon steel according to claim 12, wherein the hydrophilic functional monomer diisocyanate is toluene diisocyanate, hexamethylene diisocyanate or isophorone diisocyanate.

16. The water-soluble environment-friendly self-bonding insulating coating material for silicon steel according to claim 12, wherein the polyester diol has a hydroxyl value of 100∼200 mgKOH/g.

17. The water-soluble environment-friendly self-bonding insulating coating material for silicon steel according to claim 12, wherein the molar ratio of the isocyanate group of the diisocyanate to the hydroxyl group of dehydrated product of polyester diol and dimethylolpropionic acid is 4:3 to 5:4.

18. The water-soluble environment-friendly self-bonding insulating coating material for silicon steel according to claim 12, wherein the molar ratio of the isocyanate group of the prepolymer to the hydroxyl group of the trimethylolpropane is 1:1.

19. The water-soluble environment-friendly self-bonding insulating coating material for silicon steel according to claim 12, wherein the molar ratio of the neutralizer triethylamine to dimethylolpropionic acid in the prepolymer monomers is 1∼1.1:1, the weight ratio of water to the prepolymer is 1.8∼2:1.

20. The water-soluble environment-friendly self-bonding insulating coating material for silicon steel according to claim 1, wherein the inorganic nanoparticles are at least one of TiO₂, ZnO, SiO₂, Al₂O₃, ZrO₂, Fe₃O₄, CaCO₃ and Cr₂O₃.

21. The water-soluble environment-friendly self-bonding insulating coating material for silicon steel according to claim 1, wherein the auxiliary agent and the solvent contain ethylene glycol, and the amount of the ethylene glycol is 0.1 to 3.5% of the total weight of the coating material.

22. The water-soluble environment-friendly self-bonding insulating coating material for silicon steel according to claim 1 or 21, wherein the auxiliary agent is at least one of an antifoaming agent, a wetting agent, a leveling agent, a thickener, an anti-sedimentation agent, and an anti-flash rust agent.

23. The water-soluble environment-friendly self-bonding insulating coating material for silicon steel according to claim 1 or claim 21, wherein the solvent comprises ethylene glycol, and further comprises at least one selected from glycerol, propylene oxide, n-butanol, isobutanol, isopropanol, ethylene glycol monomethylether, ethylene glycol butyl ether, propylene glycol monomethyl ether, propylene glycol butyl ether, triethylene glycol ether and propylene glycol monomethyl ether acetate.
